# EUROPEAN PATENT APPLICATION

(11) **EP 1 507 336 A1**
(43) Date of publication of application: **16.02.2005**
(21) Application number: 03725796.1
(22) Date of filing: 16.05.2003
(51) Int. Cl.: H04B 1/707, H04Q 7/38

(54) **COMMUNICATION TERMINAL DEVICE AND SPREAD CODE ESTIMATION METHOD**

(30) Priority: 22.05.2002 JP 2002148363
(71) Applicant: MATSUSHITA ELECTRIC INDUSTRIAL CO., LTD., Kadoma-shi, Osaka 571-8501 (JP)
(72) Inventor: NAKA, Katsuyoshi, Yokosuka-shi, Kanagawa 239-0807 (JP); NISHIO, Akihiko, Yokosuka-shi, Kanagawa 239-0846 (JP)
(74) Representative: Grünecker, Kinkeldey, Stockmair & Schwanhäusser Anwaltssozietät
(86) International application number: PCT/JP2003/006096
(87) International publication number: WO 2003/098825

(57) **Abstract**

It is determined whether a secondary spreading code is multiplexed based on a result obtained by despreading a data portion of a received signal using a primary spreading code corresponding to a midamble shift included in a received signal and a result obtained by despreading the data portion using the secondary spreading code corresponding to the primary spreading code. Moreover, among the spreading codes corresponding to the midamble shifts used in the own station, when the number of the midamble shifts allocated to the own station is multiple, the delay profiles generated by the midamble shifts used in the own station are normalized to power per spreading code and a threshold value for a midamble shift determination is set using the normalized delay profiles. This makes it possible to specify all spreading codes multiplexed into the received signal and improve accuracy in the midamble shift determination even when the number of spreading codes corresponding to the midamble shifts is multiple.

## Description

### Technical Field

The present invention relates to a communication terminal apparatus and spreading code estimation method that estimates a spreading code multiplexed into a received signal using a default midamble.

### Background Art

As a method for demodulating a received signal, attention has been paid to Joint Detection (hereinafter referred to as "JD"). JD is a demodulation method for removing various types of interference such as interference between symbols, interference between codes to extract a demodulation signal. Here, in order to execute JD accurately, in a receiving apparatus, it is necessary to recognize all spreading codes multiplexed into the received signal. However, regarding multiplexed spreading codes, it is the only spreading codes allocated to a own station that a communication terminal apparatus recognizes correctly, and spreading codes allocated to the other stations are not informed from a radio base station. Accordingly, it is necessary to estimate the spreading codes allocated to the other stations accurately.

As a method for estimating a spreading code allocated to the other station to execute JD, there is a method that finds out all midambles multiplexed into a midamble portion of the received signal to estimate a spreading code from a corresponding relationship with each midamble code.

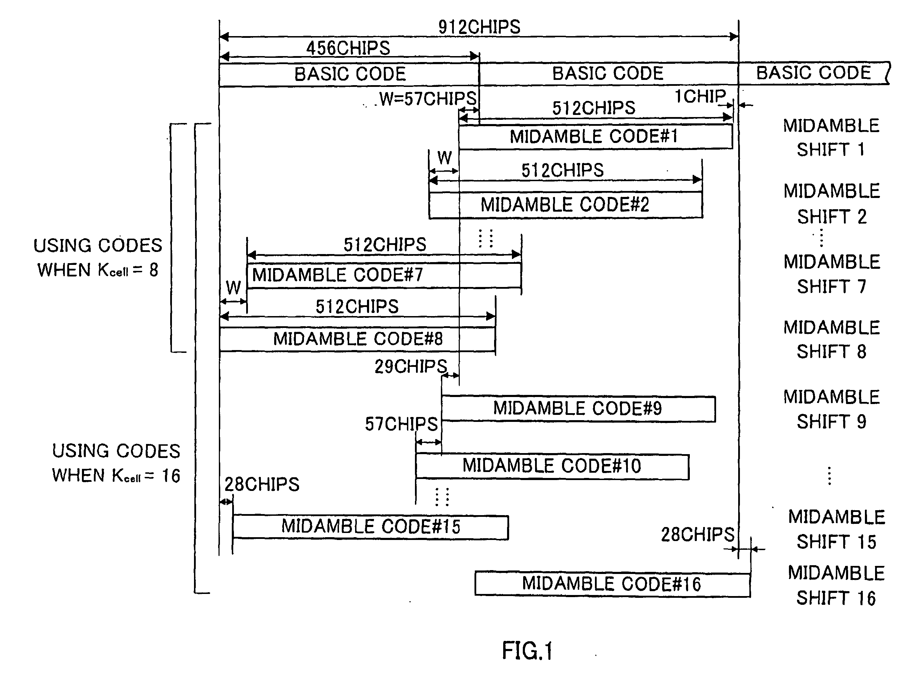

Hereinafter, an explanation will be given of the generation of midamble codes with reference to FIG. 1. Regarding the generation of midamble codes, first of all, it is assumed that two basic codes each having 456 chips are continuously prepared. It is assumed that the midamble code is formed of 512 chips and a basic code, which is shifted by one chip from the right end of continuous two basic codes and corresponds to 512 chips, is generated as a midamble code #1 (midamble shift 1) as illustrated in FIG. 1. Next, it is assumed that a basic code, which is shifted left to the midamble code #1 by 57 and which corresponds to 512 chips, is generated as a midamble code #2 (midamble shift 2). Similarly, a midamble code #3 (midamble shift 3) to a midamble code #8 (midamble shift 8) are generated by shifting the basic code left by 57 chips as ensuring 512 chips. A midamble code #9 is a basic code, which is shifted left to the midamble code #1 by 29 chips and corresponds to 512 chips. Similar to the generation of the midamble codes #2 to #8, a midamble code #10 (midamble shift 10) to a midamble code #15 (midamble shift 15) are generated by shifting the basic code left by 57 chips as ensuring 512 chips. Moreover, a midamble code #16 (midamble shift 16) is a code, which is cyclically shifted right to the midamble code #1 by 28 chips and corresponds to 512 chips. In this way, since the basic code is shifted by a predetermined amount as ensuring 512 chips to generate each midamble code, the midamble code is hereinafter referred to as midamble shift. In addition, the number of midamble shifts generated from the basic code is K_{cell} and K_{cell} is decided according to the system, and any one of values 16, 8, 4 is given. When K_{cell} = 16, midamble shifts 1 to 16 are used, when K_{cell} = 8, midamble shifts 1 to 8 are used, and when K_{cell} = 4, midamble shifts 1, 3, 5, 7 are used, respectively.

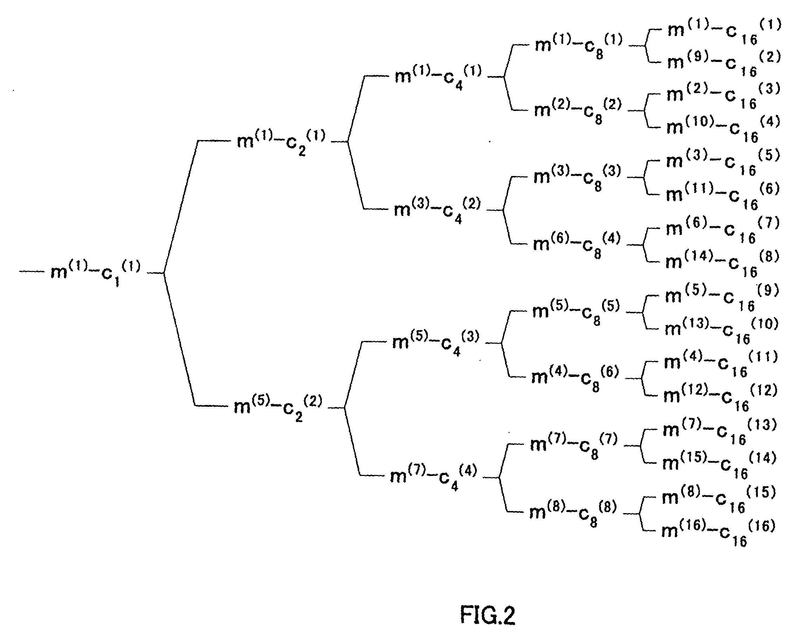

In 3GPP specification TS25.221 V4.4.0 (at the time of using a default midamble where a midamble shift and a spreading code are made to correspond to each other), the number of types of spreading codes allocated to the respective communication terminals is 16, and a corresponding relationship between the midamble shift and the spreading code number is established. More specifically, this can be explained using FIGS. 2 to 4.

FIG. 2 is a dendrogram illustrating a relationship between the midamble shift and the spreading code number when K_{cell} = 16. In this figure, m⁽¹⁾ to m⁽¹⁶⁾ show midamble shifts 1 to 16 and x of Cₓ(y) is a spreading factor and y is a spreading code number. In FIG. 2, a noteworthy point is the corresponding relationship between the rightmost spreading code number and the midamble shift where a one-to-one correspondence between the spreading code number and the midamble shift is established. For example, the spreading code number 1 corresponds to the midamble shift 1 and the spreading code number 2 corresponds to the midamble shift 9.

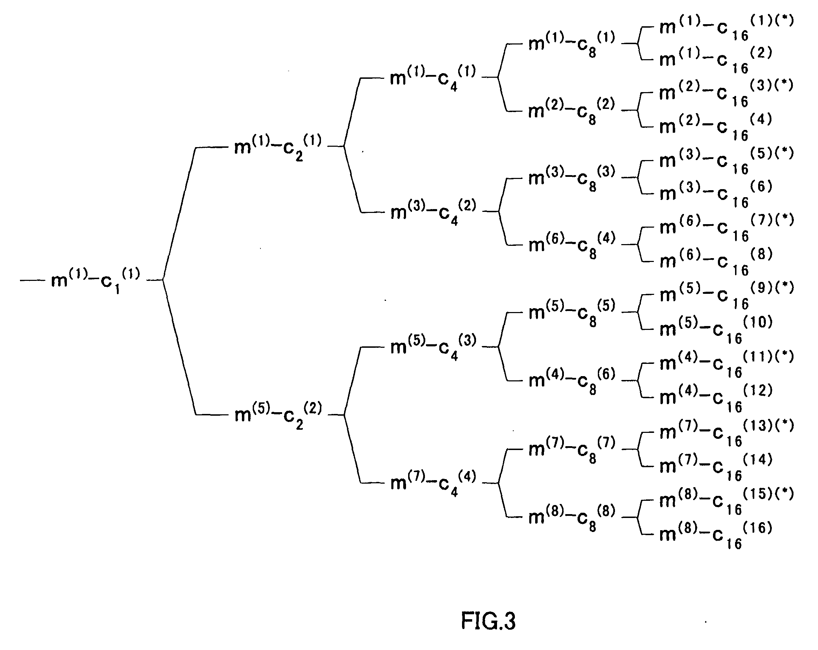

FIG. 3 is a dendrogram illustrating a relationship between the midamble shift and the spreading code number when K_{cell} = 8. In this figure, regarding the corresponding relationship between the rightmost spreading code number and the midamble shift, two spreading codes numbers correspond to one midamble shift. For example, spreading code numbers 1 and 2 correspond to only the midamble shift 1. Here, the spreading code having no symbol (*) added to a portion next to the spreading code number is referred to as primary spreading code and the spreading code having a symbol (*) added to the portion next to the spreading code number is referred to as secondary spreading code. The primary spreading code is allocated to the communication terminal apparatus at a higher priority than the secondary spreading code. Additionally, the same midamble shift cannot be allocated to the plurality of communication terminals.

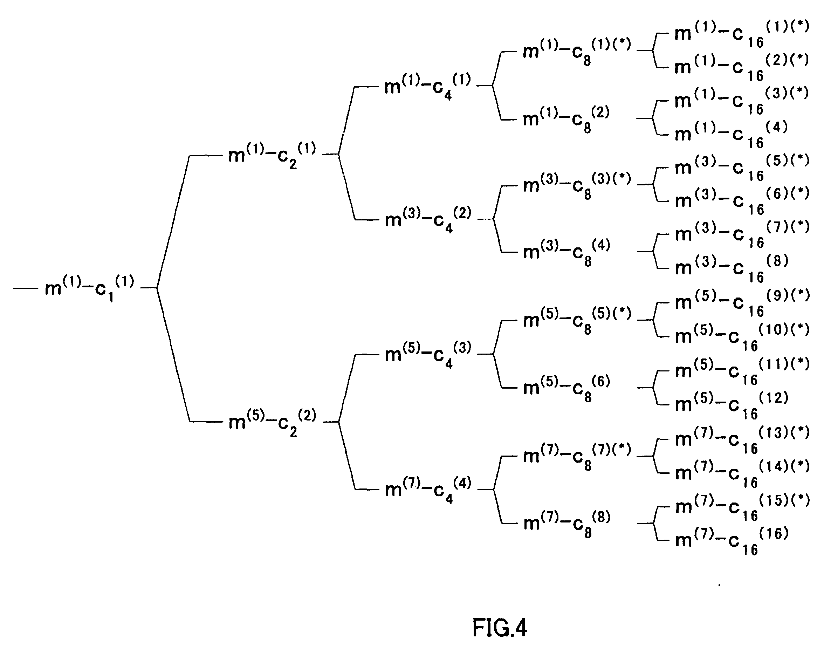

FIG. 4 is a dendrogram illustrating a relationship between the midamble shift and the spreading code number when K_{cell} = 4. In this figure, regarding the corresponding relationship between the rightmost spreading code number and the midamble shift, four spreading codes numbers correspond to one midamble shift. For example, spreading code numbers 1 to 4 correspond to only the midamble shift 1. In this figure, the primary spreading code having no symbol (*) is allocated to the communication terminal apparatus at a higher priority than the secondary spreading code. Additionally, the same midamble shift cannot be allocated to the plurality of communication terminal apparatuses.

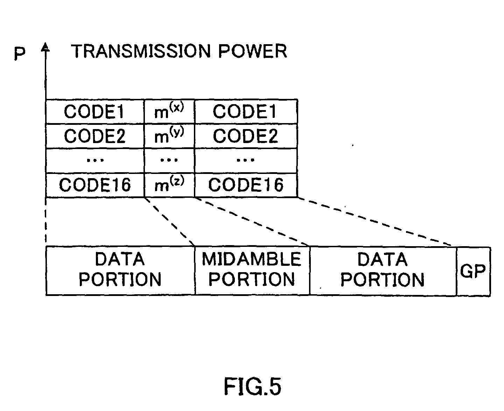

Transmission power of the midamble will be next explained using FIG. 5. FIG. 5 is a conceptual view illustrating transmission power and a slot configuration. In a base station apparatus, a midamble portion into which the midamble shifts are multiplexed is inserted between data portions in one slot and transmitted to the communication terminal apparatus. Regarding the transmission power of the midamble, the same transmission power as the data portion is set as described in 3GPP specification TS25.221 V4.4.0. As illustrated in FIG. 5, when K_{cell} = 16, the transmission power of each midamble shift is the same as the data portion.

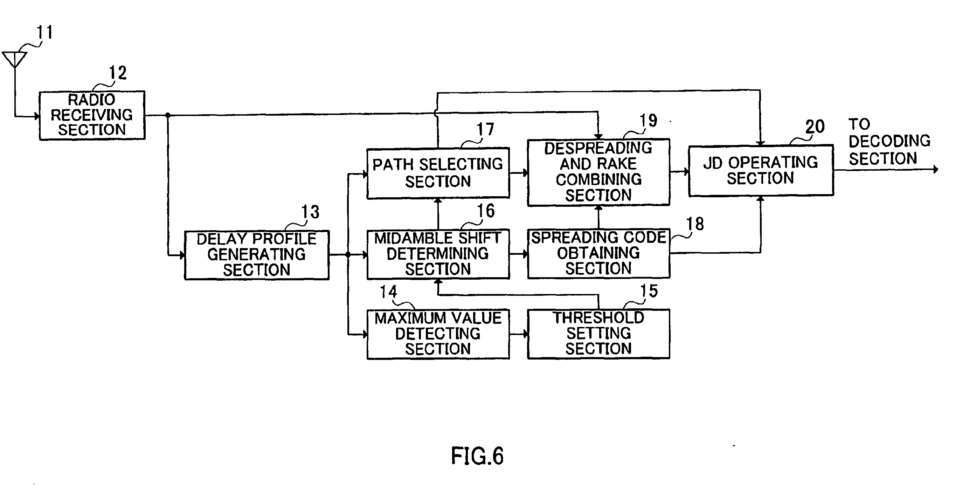

FIG. 6 is a block diagram illustration a configuration of a conventional communication terminal apparatus. In the figure, a radio receiving section 12 receives a signal sent from the base station apparatus via an antenna 11 and executes a predetermined reception processing (downconvert, A/D conversion, and the like) to the received signal. The signal subjected to radio reception processing is output to a delay profile generating section 13 and a despreading and RAKE combining section 19.

The delay profile generating section 13 executes correlation computation to the midamble portion of the received signal using K_{cell} midamble replica codes to generate K_{cell} delay profiles. The generated K_{cell} delay profiles are output to a maximum value detecting section 14, a midamble shift determining section 16, and a path selecting section 17.

The maximum value detecting section 14 detects the respective maximum values based on the delay profiles corresponding to the respective replica codes output from the delay profile generating section 13, and outputs detected K_{cell} maximum values to a threshold setting section 15. The threshold setting section 15 uses a maximum value of the delay profile of the midamble shift used in the own station as a threshold setting reference value for a midamble shift determination and sets a threshold value at a position lowered by a predetermined width from the reference value, and outputs the set threshold value to the midamble shift determining section 16.

The midamble shift determining section 16 sets the threshold value output from the threshold setting section 15 onto the profile output from the delay profile generating section 13, and determines whether the maximum value of each of the other delay profiles exceeds the threshold value. When the maximum value exceeds the threshold value, the midamble shift where the maximum value was obtained is determined as being multiplexed into the received signal and the midamble shift is sent to the path selecting section 17 and a spreading code obtaining section 18.

The path selecting section 17 detects a peak from the delay profile generated by the midamble shift determined as exceeding the threshold value by the midamble shift determining section 16 among the delay profiles output from the delay profile generating section 13, and selects a path to output a channel estimation value for each selected path and timing of the path to the despreading and RAKE combining section 19 and a JD operating section 20.

The spreading code obtaining section 18 holds a table that makes the midamble shift to correspond to the spreading code, and obtains a spreading code corresponding to the midamble shift determined as being multiplexed into the received signal by the midamble shift determining section 16 from the table. The obtained spreading code is output to the despreading and RAKE combining section 19 and the JD operating section 20.

The despreading and RAKE combining section 19 despreads the data portion using the timing of the path and the channel estimation value output from the path selecting section 17 and the spreading code obtained by the spreading code obtaining section 18, and RAKE combines the despreading results. The RAKE combining result is output to the JD operating section 20. The JD operating section 20 executes JD operation using the RAKE combining result output from the despreading and RAKE combining section 19, the spreading code output from the spreading code obtaining section 18 and the channel estimation value output from the path selecting section 17.

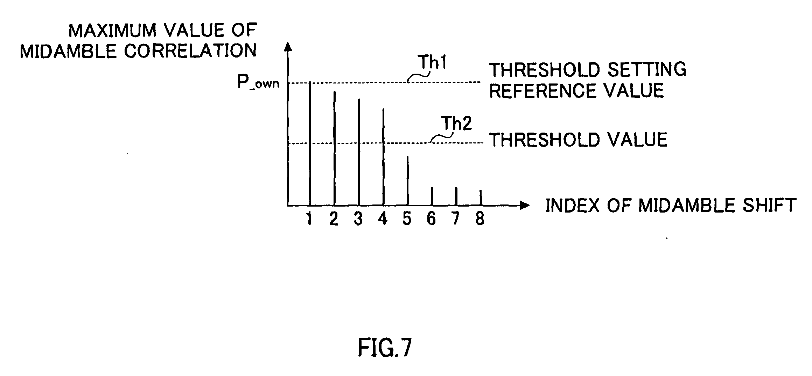

An explanation will be next given of the determination by the midamble shift determining section 16 using FIG. 7. FIG. 7 is a view explaining a state of a midamble shift determination and showing a case of K_{cell} = 8. In FIG. 7, a vertical axis indicates a maximum value of a midamble correlation, namely, a maximum correlation value between the midamble shift and the midamble replica code, a horizontal axis indicates an index of the midamble shift after sorting, and the midamble shift used in the own station is index 1.

Th1 is a threshold setting reference value and a maximum correlation value (P_own) of the midamble shift used in the own station. Th2 is a threshold value provided at a position lowered by a predetermined width from Th1.

As a result of a midamble shift determination based on Th2, it is determined that midamble shifts with indexes 1 to 4 exceeding Th2 are multiplexed into the received signal.

As mentioned above, in the conventional communication apparatus, the threshold value for the midamble determination is set based on the maximum correlation value in the delay profile of the midamble shift used in the own station, and the midamble shift is determined using the threshold value and the maximum correlation value of the delay profile of each midamble shift, so that the midamble multiplexed into the received signal is determined.

However, in the cases except for K_{cell} = 16, a one-to-one correspondence between the midamble shift and the spreading code number is not established, as illustrated in FIGS. 3 and 4, and even if the midamble shift can be correctly estimated, the allocated spreading code cannot be uniquely specified since the number of spreading codes corresponding to the midamble shift is multiple.

Moreover, in the cases except for K_{cell} = 16, since transmission power of the midamble is decided according to the number of multiplexes of the spreading code corresponding to the midamble shift, the threshold setting reference for the midamble shift determination largely varies depending on the number of codes, so that the threshold value determination does not normally operate. For example, when K_{cell} = 8 and the own station uses the spreading codes numbers 1 and 2, m⁽¹⁾ is used from FIG. 3. Since transmission power of m⁽¹⁾ is added to the spreading codes number 1 and number 2, transmission power of the midamble shift at this time results in twice as much as power of transmission power of the midamble shift corresponding to one spreading code. For this reason, the delay profile generated by the communication terminal apparatus has a correlation value twice as much as the case in which one spreading code is employed. Namely, since the reference value for the threshold determination doubles, the use of the same threshold value (relative threshold value) as the case in which one spreading code is employed causes a problem that the maximum values of the delay profiles of other station do not exceed the threshold value to degrade the accuracy in the midamble shift determination.

### Disclosure of Invention

An object of the present invention is to provide a communication terminal apparatus and spreading code estimation method that can improve accuracy in midamble shift determination and specify all spreading codes multiplexed into a received signal even when the number of spreading codes corresponding to a midamble shift is multiple.

A first aspect of the present invention is to determine whether a secondary spreading code is multiplexed based on a result obtained by despreading a data portion of a received signal using a primary spreading code corresponding to a midamble shift included in the received signal and a result obtained by despreading the data portion of the received signal using a secondary spreading code corresponding to the primary spreading code. This enables to specify all spreading codes multiplexed into the received signal even when multiple spreading codes correspond to one midamble shift.

Moreover, a second aspect of the present invention is that when the number of spreading codes allocated to a own station is multiple among spreading codes corresponding to midamble shifts used in the own station, delay profiles generated by the midamble shifts used in the own station are normalized to a correlation value per spreading code and a threshold value for midamble shift determination is set using the normalized delay profile. This enables to set the threshold value with reference to the correlation value of the midamble shift per one spreading code and improve accuracy in the midamble shift determination.

### Brief Description of Drawings

FIG. 1 is a view explaining the generation of midamble shifts;
FIG. 2 is a dendrogram illustrating a relationship between a midamble shift and a spreading code number when K_{cell} = 16;
FIG. 3 is a dendrogram illustrating a relationship between a midamble shift and a spreading code number when K_{cell} = 8;
FIG. 4 is a dendrogram illustrating a relationship between a midamble shift and a spreading code number when K_{cell} = 4;
FIG. 5 is a conceptual view illustrating transmission power and a slot configuration;
FIG. 6 is a block diagram illustration a configuration of a conventional communication terminal apparatus;
FIG. 7 is a view explaining a conventional midamble shift determination;
FIG. 8 is a block diagram illustrating a configuration of a communication terminal apparatus according to Embodiment 1 of the present invention;
FIG. 9 is a flowchart illustrating operations of a communication terminal according to Embodiment 1 of the present invention;
FIG. 10 is a view explaining a state of a midamble shift determination according to Embodiment 1 of the present invention;
FIG. 11 is a block diagram illustrating a configuration of a communication terminal apparatus according to Embodiment 2 of the present invention;
FIG. 12 is a view explaining a state of a midamble shift determination according to Embodiment 2 of the present invention;
FIG. 13 is a block diagram illustrating a configuration of a communication terminal apparatus according to Embodiment 3 of the present invention; and
FIG. 14 is a block diagram illustrating a configuration of a communication terminal apparatus according to Embodiment 4 of the present invention.

### Best Mode for Carrying Out the Invention

Embodiments of the present invention will be explained with reference to the drawings.

### (Embodiment 1)

This embodiment explains a case in which when a one-to-one correspondence between a midamble shift and a spreading code number corresponding thereto is not established, all spreading codes included in a received signal are specified. Moreover, this explains a case in which when the number of spreading codes corresponding to midamble shifts used in a own station is multiple, delay profiles of the midamble shifts are normalized to a correlation value per spreading code and a threshold value for a midamble shift determination is set.

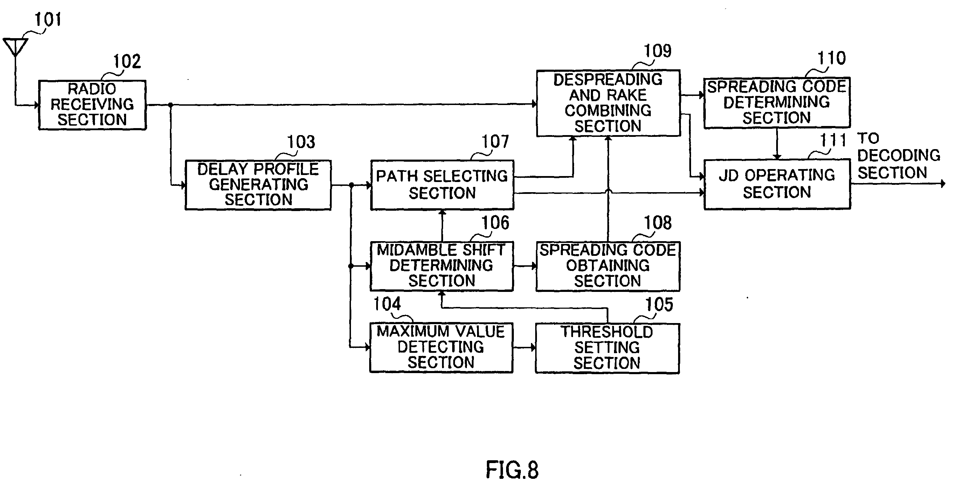

FIG. 8 is a block diagram illustrating a configuration of a communication terminal apparatus according to Embodiment 1 of the present invention. In this figure, a radio receiving section 102 receives a signal sent from a base station via an antenna 101 and executes a predetermined reception processing (downconvert, A/D conversion, and the like) to the received signal. The signal subjected to radio reception processing is output to a delay profile generating section 103 and a despreading and RAKE combining section 109.

The delay profile generating section 103 executes correlation computation to the midamble portion of the received signal using K_{cell} midamble replica codes to generate delay profiles. The generated delay profiles are output to a maximum value detecting section 104, a midamble shift determining section 106, and a path selecting section 107.

The maximum value detecting section 104 detects a maximum correlation value (P_own) from the delay profiles of the midamble shifts used in the own station and outputs the detected maximum value to a threshold setting section 105.

The threshold setting section 105 uses a value, which was obtained by dividing the maximum value P_own detected by the maximum value detecting section 104 by the number of the spreading codes N_own allocated to the own station in the spreading codes each having a corresponding relationship with the midamble shifts used in the own station, as a threshold setting reference value for a midamble shift determination. In other words, the delay profiles of the midamble shifts used in the own station are normalized to a correlation value equivalent to one code. Then, the threshold value for the midamble shift determination is set at a position lowered by a predetermined width from a reference value.

The midamble shift determining section 106 determines a threshold value of the maximum value detected from the delay profile generated by the respective midamble shift multiplexed into the received signal based on the threshold value set by the threshold setting section 105. The delay profile generated from the midamble shift determined as exceeding the threshold value is output to the path selecting section 107. Moreover, the midamble shift determining section 106 sends the midamble shift determined as exceeding the threshold value to a spreading code obtaining section 108.

The path selecting section 107 detects a peak from the delay profile generated by the midamble shift determined as exceeding the threshold value by the midamble shift determining section 106, and selects a path. A channel estimation value for each selected path and timing of the path are output to a despreading and RAKE combining section 109 and a JD operating section 111.

The spreading code obtaining section 108 obtains a primary spreading code and a secondary spreading code among spreading codes, which correspond to the midamble shifts determined as being multiplexed into the received signal by the midamble shift determination, from a table that is held by the spreading code obtaining section 108. The obtained primary spreading code and the secondary spreading code are output to the despreading and RAKE combining section 109.

The despreading and RAKE combining section 109 performs despreading over a plurality of symbols of the data portion using the primary spreading code and the secondary spreading code output from the spreading code obtaining section 108 according to the path selection result output from the path selecting section 107, namely, despread timing, and outputs the despread result to a despreading code determining section 110. Moreover, the despreading and RAKE combining section 109 performs despreading over the entirety of the data portion using the primary spreading code and the secondary spreading code, and RAKE combines the despread signal, and outputs the combining result to the JD operating section 111.

The spreading code determining section 110 determines a threshold value on the despread result (power) of the secondary spreading code corresponding to the primary spreading code with reference to the despread result of each primary spreading code. When the despread result of the secondary spreading code exceeds the threshold value, the spreading code determining section 110 determines that the secondary spreading code is multiplexed. When the number of secondary spreading codes is multiple, each threshold value is determined similarly. The determined spreading code is output to the JD operating section 111. In addition, the spreading code determining section 110 may use the RAKE combining result instead of the despread result output from the despreading and RAKE combining section 109. Moreover, one that is obtained by power combining the despread results of the multiple symbols and the RAKE combining result may be used as the reference value.

The JD operating section 111 executes JD operation using the RAKE combining result output from the despreading and RAKE combining section 109, the spreading code determined by the spreading code determining section 110, and the channel estimation value output from the path selecting section 107.

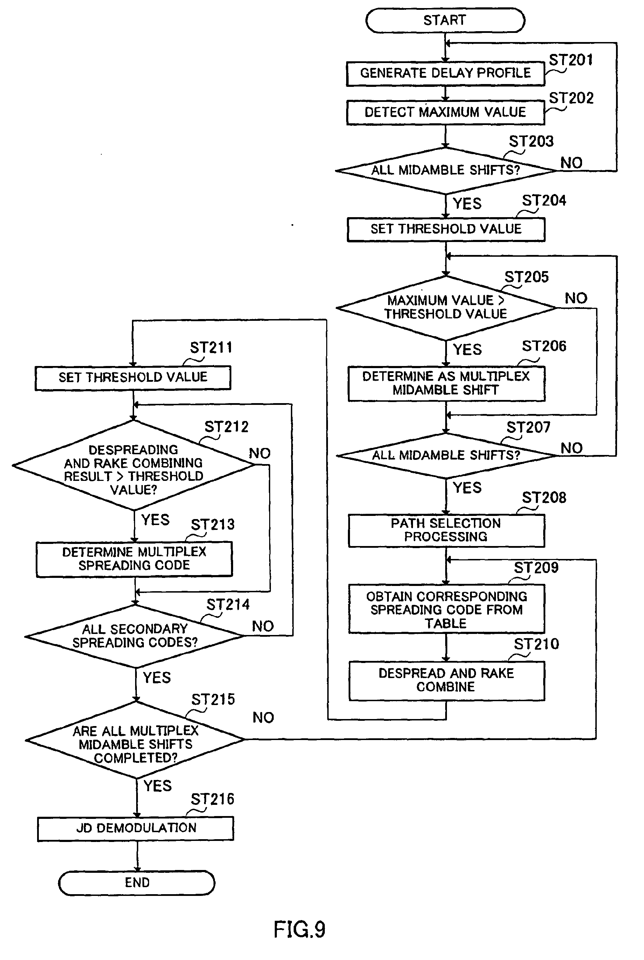

An explanation will be given of operations of the communication terminal apparatus having the aforementioned configuration using FIG. 9. In this figure, in ST201, the delay profile generating section 103 performs correlation between a midamble included in the received signal and a midamble replica code to generate a delay profile. In ST202, the maximum value detecting section 104 detects a maximum value on the delay profile generated in ST201. In ST203, the maximum value detecting section 104 checks whether the maximum values of all midamble shifts are detected. When the maximum values of all midamble shifts are detected, the processing proceeds to ST204. When the maximum values of all midamble shifts are not detected, the processing goes back to ST201 and ST201 to ST203 are repeated until the maximum values of all midamble shifts are detected.

In ST204, the threshold setting section 105 sets a threshold value based on the maximum value of the midamble shift that is detected in ST202 and used in the own station and the number of spreading codes allocated to the own station. In ST205, the mid'amble shift determining section 106 performs threshold determination between the maximum value detected in ST202 and the threshold value set in ST204. When the maximum value exceeds the threshold value, the processing moves to ST206, and when the maximum value is smaller than the threshold value, the processing moves to ST207. In ST206, the midamble shift where the maximum value determined as exceeding the threshold value in ST205 was detected is determined as a midamble shift multiplexed into the received signal. In ST207, it is checked whether the threshold determination between the maximum value and the threshold value set in ST204 is executed in connection with all midamble shifts. When the threshold determination is executed in connection with all midamble shifts, the processing moves to ST208, and when the threshold determination is not executed in connection with all midamble shifts, the processing goes back to ST205 and ST205 to ST207 is repeated until the threshold determination is executed in connection with all midamble shifts.

In ST208, the path selecting section 107 executes path selection processing. In ST209, the spreading code obtaining section 108 obtains a spreading code corresponding to the midamble shift multiplexed into the received signal from the table. In ST210, the despreading and RAKE combining section 109 performs despreading over the multiple symbols of the data portion using the spreading code obtained in ST209 and RAKE combines the despread signal.

In ST211, the spreading code determining section 110 sets a threshold value with reference to the power combined value (power combination over the multiple symbols) as a result of despreading over the multiple symbols using the primary spreading code. Here, the reason why the spreading code determining section 110 uses the despreading result of the primary spreading code as a reference is that since the primary spreading code is allocated on a priority basis, the primary spreading code, which corresponds to the midamble shift determined as being multiplexed into the received signal, is allocated without fail. In ST212, the threshold determination between the power combining value of the despread results over the multiple symbols of the data portion using the secondary spreading code and the threshold value set in ST211 is performed. When the result is determined as exceeding the threshold value, the processing moves to ST213 and when the result is determined as being smaller than the threshold value, the processing moves to ST214.

In ST213, the secondary spreading code by which the despread result determined as exceeding the threshold value is provided is determined as the spreading code multiplexed into the received signal. In ST214, it is checked whether the results despread by all secondary spreading codes are subjected to the threshold value determination in ST212. When the threshold determination is executed in connection with all secondary spreading codes, the processing moves to ST215, and when the threshold determination is not executed in connection with all secondary spreading codes, the processing goes back to ST212 and ST212 to ST214 are repeated until the threshold value is determined in connection with all secondary spreading codes.

In ST215, it is checked whether the operations from ST209 to ST214 have been made in connection with all midamble shifts multiplexed into the received signal. When the operations have been made in connection with all midamble shifts, the processing proceeds to step ST216, and when the operations have not been made in connection with all midamble shifts, the processing goes back to ST209 and the operations from ST209 to ST214 are repeated in connection with the midamble shifts whose operations are not completed.

In ST216, the JD operating section 111 executes JD modulation using the RAKE combined signal, the spreading code multiplexed into the received signal and the channel estimation value.

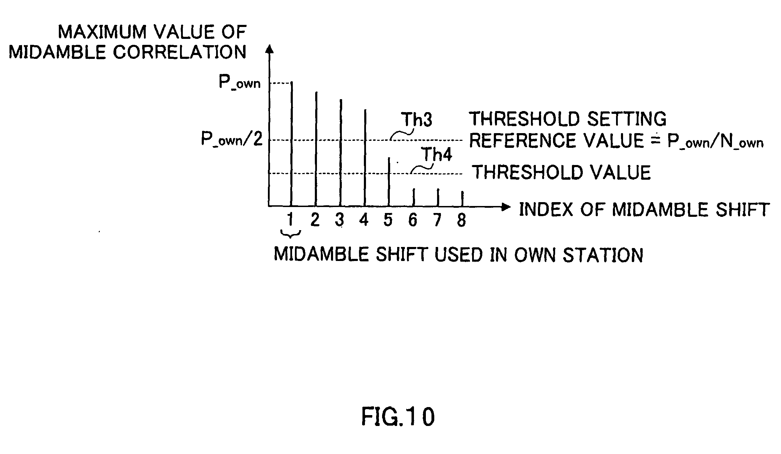

An explanation will be next given of the determination by the midamble shift determining section 106 in Embodiment 1 of the present invention using FIG. 10. FIG. 10 is a view illustrating a state of the midamble shift determination using the same sample as FIG. 7 that explains the state of the convention midamble shift. In FIG. 10, a vertical axis indicates a maximum value of midamble correlation, namely, a maximum correlation value between the midamble shift and a midamble shift replica code, and a horizontal axis indicates an index of the midamble shift after sorting. It is assumed that the midamble shift used by the own station is index 1 and the number of spreading codes (N_own) allocated to the own station is 2.

Th3 is a threshold setting reference value and a value obtained by dividing the maximum correlation value (P_own) of the midamble shift used in the own station by the number of spreading codes (N_own) allocated to the own station. In the case of FIG. 10, P_own/2 is Th3. Th4 is a threshold value provided at a position lowered by a predetermined width from Th3.

As is obvious from FIG. 7, in conventional, it is determined that indexes 1 to 4 are multiplexed into the received signal. However, in this embodiment, the midamble shift determining section 107 determines indexes 1 to 5 exceeding Th4 as the midamble shifts multiplexed into the received signal. In other words, the midamble shift of index 5, which cannot be detected by the conventional communication terminal apparatus, can be detected by the communication terminal of this embodiment, thereby making it possible to improve accuracy of the midamble shift determination.

In this way, according to this embodiment, even in a case in which a one-to-one correspondence between the midamble shift and the spreading code number corresponding thereto is not established (excepting for K_{cell} = 16), the plurality of spreading codes corresponding to the midamble shifts included in the received signal can be specified.

Among the spreading codes corresponding to the midamble shifts used in the own station, when the number of spreading codes allocated to the own station is multiple, the delay profiles of the received midamble shifts are normalized to the correlation value per spreading code and the threshold value for the midamble shift determination is set, thereby making it possible to improve accuracy in the midamble shift determination.

### (Embodiment 2)

This embodiment explains a case in which when the number of midamble shifts is multiple at the time of performing midamble shift determination, multiple delay profiles of the midamble shifts used in the own station are normalized to a correlation value per spreading code and an average value of the maximum values of the respective delay profiles is set as a threshold setting reference value for a midamble shift determination.

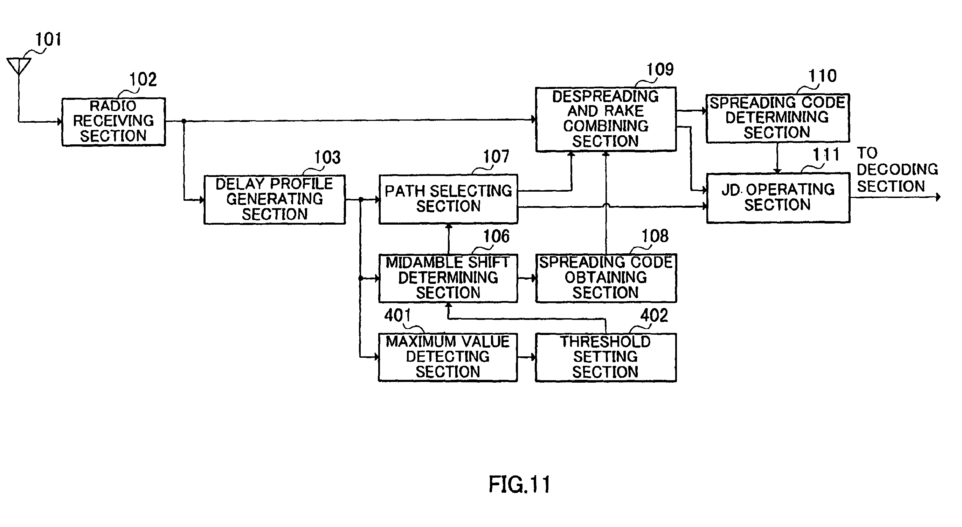

FIG. 11 is a block diagram illustrating a configuration of a communication terminal apparatus according to Embodiment 2 of the present invention. Additionally, in this figure, parts in this figure common to those in FIG. 8 are assigned the same reference numeral as in FIG.8 and their detailed explanations are omitted.

When the number of midamble shifts used in the own station is multiple, a maximum value detecting section 401 detects maximum values (P_own1 to P_ownN: N is the number of midamble shifts used in the own station) of delay profiles generated by the respective midamble shifts used in the own station and sends the detected maximum values to a threshold setting section 402.

The threshold setting section 402 divides the maximum values P_own1 to P_ownN by the corresponding number of spreading codes N_own1, N_own2, ..., N_ownN, respectively. Then, the threshold setting section 402 obtains an average value of division results (P_own1/N_own1+P_own2/N_own2+ ... +P_ownN/N_ownN)/N. The threshold setting section 402 uses the obtained average value as a threshold setting reference value for a midamble shift determination and sets a threshold value at a position lowered by a predetermined value from the reference value. Additionally, N_own1 to N_ownN are the number of spreading codes allocated to the own station in the spreading codes each having a corresponding relationship with the midamble shifts used in the own station. Accordingly, the total number of spreading codes allocated to the own station is N_own1 + N_own2 + ... + N_ownN.

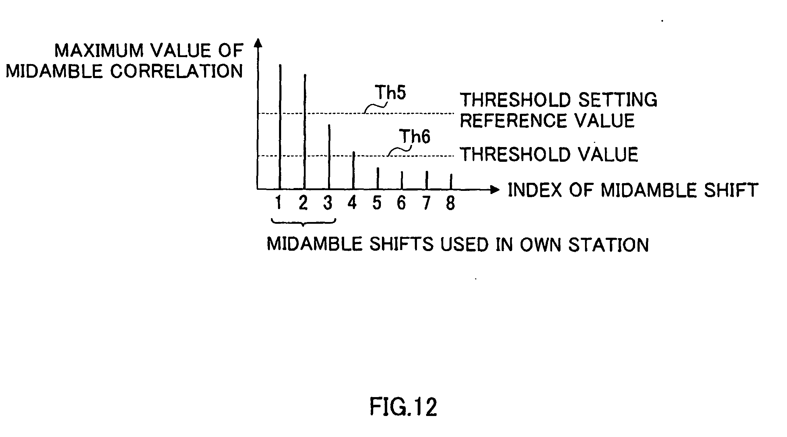

An explanation will be next given of the determination by the midamble shift determining section 106 in Embodiment 2 of the present invention using FIG. 12. FIG. 12 is a view illustrating a state of the midamble shift determination. In this figure, a vertical axis indicates a maximum value of midamble correlation, namely, a maximum correlation value between the midamble shift and a midamble shift replica code, and a horizontal axis indicates an index of the midamble shift after sorting. It is assumed that the midamble shifts used in the own station are indexes 1 to 3 and that the number of spreading codes allocated to the own station is N_own1 = N_own2 = 2, N_own3 = 1.

Th5 is a threshold setting reference value and an average value obtained by diving the maximum correlation values (P_own1 to P_ownN) of the midamble shifts used in the own station by the spreading code numbers (N_own1 to N_ownN) allocated to the own station, namely, (P_own1/N_own1+P_own2/N_own2+ ... +P_ownN/N_ownN)/N. Th6 is a threshold value provided at a position lowered by a predetermined width from Th5.

It is shown from FIG. 12 that indexes 1 to 4 exceeding the threshold value Th6 are determined as the midamble shifts multiplexed into the received signal and that the index 4 is the midamble shift used in the other station since the midamble shifts used in the own station are indexes 1 to 3.

In this way, according to this embodiment, even in a case in which the number of the midamble shifts used in the own station is multiple at the time of performing the midamble shift determination, multiple delay profiles of the midamble shifts used in the own station are normalized to the correlation value corresponding to one code and the average value of the maximum value of each profile is set as a threshold setting reference value for the midamble shift determination, thereby making it possible to improve accuracy in the midamble shift determination.

### (Embodiment 3)

This embodiment explains a case in which when the number of midamble shifts is multiple at the time of performing midamble shift determination, delay profiles generated by a midamble shift with the lowest number among the midamble shifts used in the own station are normalized to a correlation value corresponding to one spreading code to use as a threshold setting reference value for a midamble shift determination.

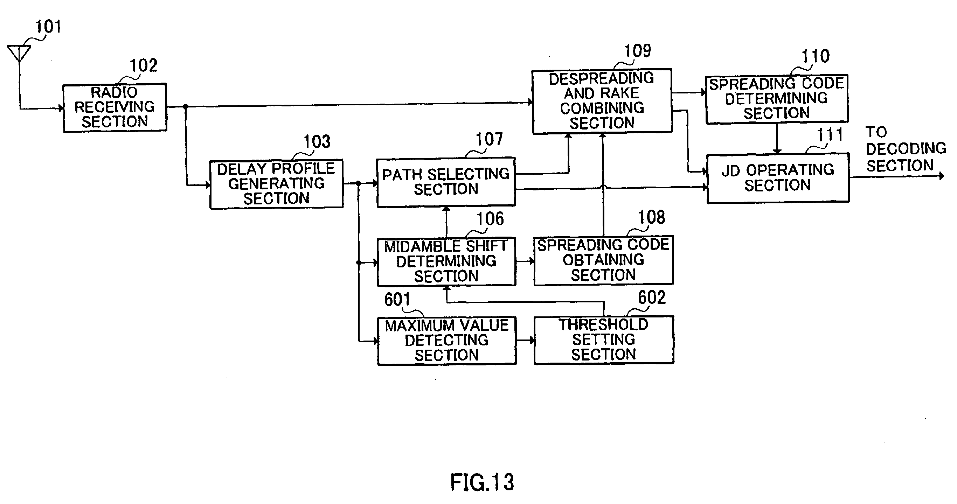

FIG. 13 is a block diagram illustrating a configuration of a communication terminal apparatus according to Embodiment 3 of the present invention. Additionally, in this figure, parts in this figure common to those in FIG. 8 are assigned the same reference numeral as in FIG.8 and their detailed explanations are omitted.

When the number of midamble shifts used in the own station is multiple, a maximum value detecting section 601 detects a maximum value (P_own) of a delay profile generated by a midamble shift with the lowest number among the midamble shifts used in the own station and sends the detected maximum value to a threshold setting section 602.

The threshold setting section 602 uses a value obtained by dividing the maximum value P_own detected by the maximum value detecting section 601 by the number of spreading codes N_own as a threshold setting reference value for a midamble shift determination. Then, the threshold setting section 602 sets a threshold value for the midamble shift determination at a position lowered by a predetermined value from the reference value. Additionally, N_own is the number of spreading codes allocated to the own station in the spreading codes each having the corresponding relationship with the midamble shift with the lowest number among the midamble shifts used in the own station.

In this way, according to this embodiment, even in a case in which the number of the midamble shifts used in the own station is multiple at the time of performing the midamble shift determination, the delay profiles generated by the midamble shift with the lowest number among the midamble shifts used in the own station are normalized to the correlation value per spreading code to use as the threshold setting reference value for the midamble shift determination, thereby making it possible to reduce an amount of computation processing in connection with computation of a reference value.

In addition, this embodiment obtained the threshold setting reference value based on the midamble shift with the lowest number among the midamble shifts used in the own station. However, the midamble shift number is not limited to the lowest one and the highest number may be possible. In a word, the threshold setting reference value may be obtained based on any one of the midamble shifts used in the own station.

### (Embodiment 4)

This embodiment explains a case in which when the number of midamble shifts is multiple at the time of performing the midamble shift determination, delay profiles generated by a midamble shift where the number of spreading codes allocated to the own station reaches maximum among the midamble shifts used in the own station are normalized to a correlation value for one spreading code to use as a threshold setting reference value for a midamble shift determination.

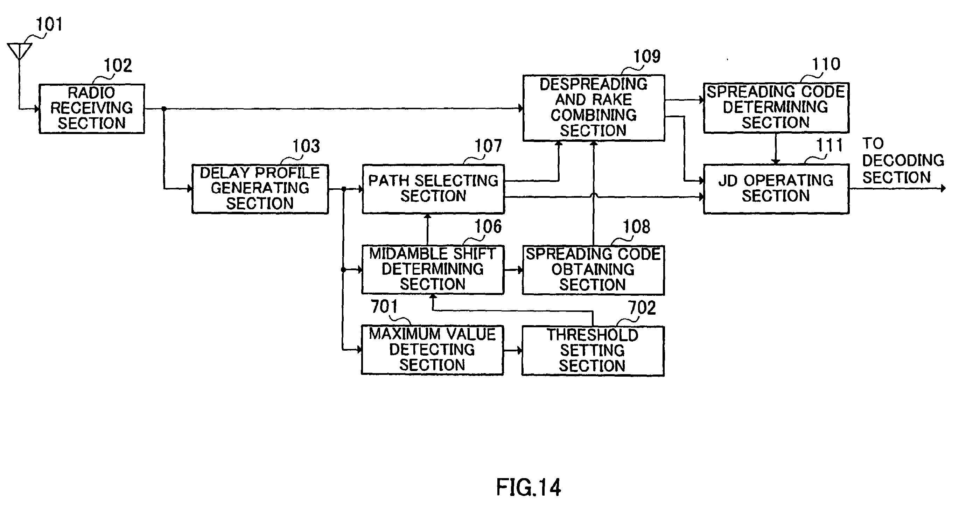

FIG. 14 is a block diagram illustrating a configuration of a communication terminal apparatus according to Embodiment 4 of the present invention. Additionally, in this figure, parts in this figure common to those in FIG. 8 are assigned the same reference numeral as in FIG.8 and their detailed explanations are omitted.

When the number of midamble shifts used in the own station is multiple, a maximum value detecting section 701 detects a maximum value of a delay profile generated by a midamble shift corresponding to the number of spreading codes that reaches maximum (the maximum number of spreading codes) among the number of spreading codes allocated to the own station in the spreading codes each having a corresponding relationship with the midamble shifts used in the own station, and sends the detected maximum value to a threshold setting section 702.

The threshold setting section 702 uses a value obtained by dividing the maximum value sent from the maximum value detecting section 701 by the maximum number of spreading codes as a threshold setting reference value for a midamble shift determination. Then, the threshold setting section 702 sets a threshold value for the midamble shift determination at a position lowered by a predetermined value from the reference value. Here, the reason why the maximum number of spreading codes is used is that the case using 100 samples has higher reliability after normalization (per one sample) as comparison between the case using 10 samples to be normalized and the case using 100 samples. In other words, the normalization can be executed with higher reliability as the number of samples (here, the number of spreading codes) increases.

In addition, when the maximum value of the number of spreading codes is multiple, the lower midamble shift number is used.

In this way, according to this embodiment, even when the number of the midamble shifts used in the own station is multiple at the time of performing the midamble shift determination, the delay profiles generated by the midamble shift where the number of spreading codes allocated to the own station reaches maximum among the midamble shifts used in the own station are normalized to the correlation value per one spreading code to use as a threshold setting reference value for midamble shift determination, thereby making it possible to improve accuracy in the midamble shift determination.

As explained above, according to the present invention, it is determined whether the secondary spreading code is multiplexed based on the result obtained by despreading the data portion of the received signal using the primary spreading code corresponding to the midamble shift included in the received signal and the result obtained by despreading the data portion using the secondary spreading code corresponding to the primary spreading code, thereby making it possible to specify all spreading codes multiplexed into the received signal even when the multiple spreading codes correspond to one midamble shift.

Moreover, among the spreading codes corresponding to the midamble shifts used in the own station, even when the number of the midamble shifts allocated to the own station is multiple, the delay profiles generated by the midamble shift used in the own station are normalized to a correlation value per spreading code and the threshold value of midamble shift determination is set using the normalized delay profile, thereby making it possible to set the threshold value with reference to the correlation value of the midamble shift per spreading code and improve accuracy in the midamble shift determination.

A communication terminal apparatus of the present invention adopts a configuration including a receiving section that receives a signal spread and sent from a communication partner, a despreading section that despreads the received signal using a plurality of spreading codes, which is made to correspond to midamble codes multiplexed into the signal received by said receiving section on a predetermined priority basis, in the priority order, and a spreading code determining section that determines a spreading code used when the received signal is formed based on signal power after despreading.

According to this configuration, even when the number of spreading codes corresponding to one midamble code is multiple, signal power after despreading using the plurality of spreading codes, which corresponds to the midamble codes multiplexed into the received signal, exceeds a predetermined threshold value, thereby making it possible to determine that the spreading codes used in despreading are spreading codes multiplexed into the received signal.

The communication terminal apparatus of the present invention adopts a configuration wherein the plurality of spreading codes, which is made to correspond to the midamble codes on the predetermined priority basis, are a primary spreading code and a secondary spreading code.

According to this configuration, for example, the primary spreading code and the secondary spreading code are made to correspond to the midamble codes in order on the priority basis, thereby making it possible to use the conventional specification effectively.

The communication terminal apparatus of the present invention adopts a configuration further including a midamble code determining section that determines that a known midamble code where a correlation value between the midamble code multiplexed into the received signal and the known midamble code exceeds a predetermined threshold value is a midamble code multiplexed into the received signal, and a threshold setting means that normalizes a correlation value between a midamble code used in a own station and the known midamble code in unit of one spreading code to set a threshold value used in determining the midamble code multiplexed into the received signal based on the normalized correlation value.

According to this configuration, even when the number of midamble codes allocated to the own station is multiple, the threshold value is set based on the correlation value normalized in unit of one spreading code to perform threshold determination between the set threshold value and the correlation value between the midamble code of the received signal and the known midamble code, thereby making it possible to improve accuracy in determination of the midamble code multiplexed into the received signal.

The communication terminal apparatus of the present invention adopts a configuration wherein said threshold setting section normalizes a maximum value of the correlation value between the midamble code used in the own station and the known midamble code by the number of spreading codes allocated to the own station.

According to this configuration, even when the multiple spreading codes allocated to the own station correspond to one midamble code, the threshold value is set after normalization to the correlation value in unit of one spreading code, thereby making it possible to improve accuracy in determination of the midamble code multiplexed into the received signal.

The communication terminal apparatus of the present invention adopts a configuration wherein when the number of midamble codes used in the own station is multiple, said threshold setting section normalizes a maximum value of the correlation value between the midamble codes used in the own station and the known midamble code for each midamble code by the number code of spreading codes, which corresponds to the midamble codes used in the own station and are allocated to the own station, to average the normalized correlation values by the number of midamble codes used in the own station.

According to this configuration, even when the number of midamble codes used in the own station is multiple and there are multiple spreading codes, which correspond to the respective midamble codes respectively and are allocated to the own station, the threshold value is set after normalization to the correlation value in unit of one spreading code, thereby making it possible to improve accuracy in determination of the midamble code multiplexed into the received signal.

The communication terminal apparatus of the present invention adopts a configuration wherein when the number of midamble codes used in the own station is multiple, said threshold setting section normalizes a maximum value of the correlation value between any one of midamble codes used in the own station and the known midamble code by the number of spreading codes, which corresponds to the midamble code where the maximum value was obtained and are allocated to the own station.

According to this configuration, even when the number of midamble codes used in the own station is multiple, normalization is performed using any one of midamble codes used in the own station, thereby making it possible to reduce an amount of processing in connection with normalization.

The communication terminal apparatus of the present invention adopts a configuration wherein when the number of midamble codes used in the own station is multiple, said threshold setting section normalizes a maximum value of the correlation value between the midamble code, which corresponds to the maximum number of spreading codes allocated to the own station among the spreading codes corresponding to the plurality of multiple midamble codes, and the known midamble code by the maximum number of spreading codes.

According to this configuration, by normalizing the maximum value of the correlation value between the midamble code, which corresponds to the maximum number of spreading codes allocated to the own station, and the known midamble by the maximum number of spreading codes, it is possible to improve reliability of the normalized correlation value, and since the threshold value is set based on the normalized correlation value with high reliability, it is possible to improve accuracy in the determination of the midamble code multiplexed into the received signal even when the number of midamble codes used in the own station is multiple.

The communication terminal apparatus of the present invention adopts a configuration further including a JD operating section that executes joint detection operation using a spreading code determined as being multiplexed into the received signal.

According to this configuration, since the joint detection operation is executed using the spreading code determined accurately, it is possible to improve interference removal performance.

A spreading code estimation method of the present invention includes a receiving step of receiving a signal spread and sent from a communication partner a despreading step of despreading the received signal using a plurality of spreading codes, which is made to correspond to midamble codes multiplexed into the signal received by said receiving step on a predetermined priority basis, in the priority order, and a spreading code determining step of determining a spreading code used when said received signal is formed based on signal power after despreading.

According to this method, even when the number of spreading codes corresponding to one midamble code is multiple, signal power after despreading using the plurality of spreading codes, which corresponds to the midamble codes multiplexed into the received signal, exceeds a predetermined threshold value, thereby making it possible to determine that the spreading codes used in despreading are spreading codes multiplexed into the received signal.

This application is based on the Japanese Patent Application No. 2002-148363 filed on May 22, 2002, entire content of which is expressly incorporated by reference herein.

### Industrial Applicability

The present invention is suitable for use in a communication terminal apparatus and spreading code estimation method that estimates a spreading code multiplexed into a received signal using a default midamble.

## Claims

1. A communication terminal apparatus comprising:
a receiving section that receives a signal spread and sent from a communication partner;
a despreading section that despreads the received signal using a plurality of spreading codes, which is made to correspond to midamble codes multiplexed into the signal received by said receiving section on a predetermined priority basis, in the priority order; and
a spreading code determining section that determines a spreading code used when the received signal is formed based on signal power after despreading.

2. The communication terminal apparatus according to claim 1, wherein the plurality of spreading codes, which is made to correspond to the midamble codes on the predetermined priority basis, are a primary spreading code and a secondary spreading code.

3. The communication terminal apparatus according to claim 1, further comprising:
a midamble code determining section that determines that a known midamble code where a correlation value between the midamble code multiplexed into the received signal and the known midamble code exceeds a predetermined threshold value is a midamble code multiplexed into the received signal; and
a threshold setting means that normalizes a correlation value between a midamble code used in a own station and the known midamble code in unit of one spreading code to set a threshold value used in determining the midamble code multiplexed into the received signal based on the normalized correlation value.

4. The communication terminal apparatus according to claim 3, wherein said threshold setting section normalizes a maximum value of the correlation value between the midamble code used in the own station and the known midamble code by the number of spreading codes allocated to the own station.

5. The communication terminal apparatus according to claim 3, wherein when the number of midamble codes used in the own station is multiple, said threshold setting section normalizes a maximum value of the correlation value between the midamble codes used in the own station and the known midamble code for each midamble code by the number of spreading codes, which corresponds to the midamble codes used in the own station and are allocated to the own station, to average the normalized correlation values by the number of midamble codes used in the own station.

6. The communication terminal apparatus according to claim 3, wherein when the number of midamble codes used in the own station is multiple, said threshold setting section normalizes a maximum value of the correlation value between any one of midamble codes used in the own station and the known midamble code by the number of spreading codes, which corresponds to the midamble code where the maximum value was obtained and are allocated to the own station.

7. The communication terminal apparatus according to claim 3, wherein when the number of midamble codes used in the own station is multiple, said threshold setting section normalizes a maximum value of the correlation value between the midamble code, which corresponds to the maximum number of spreading codes allocated to the own station among the spreading codes corresponding to the plurality of multiple midamble codes, and the known midamble code by the maximum number of spreading codes.

8. The communication terminal apparatus according to claim 1, further comprising a JD operating section that executes joint detection operation using a spreading code determined as being multiplexed into the received signal.

9. A spreading code estimation method comprising:
a receiving step of receiving a signal spread and sent from a communication partner;
a despreading step of despreading the received signal using a plurality of spreading codes, which is made to correspond to midamble codes multiplexed into the signal received by said receiving step on a predetermined priority basis, in the priority order; and
a spreading code determining step of determining a spreading code used when said received signal is formed based on signal power after despreading.
